# EUROPÄISCHE PATENTSCHRIFT

(11) **EP 2 957 862 B1**
(45) Veröffentlichungstag und Bekanntmachung des Hinweises auf die Patenterteilung: **30.11.2016**
(21) Anmeldenummer: 15166162.6
(22) Anmeldetag: 04.05.2015
(51) Int. Cl.: G01C 19/56, G01C 19/5733

(54) **SENSORVORRICHTUNG UND VERFAHREN ZUM BETREIBEN EINER SENSORVORRICHTUNG**
SENSOR DEVICE AND METHOD FOR OPERATING A SENSOR DEVICE
DISPOSITIF DE DÉTECTION ET PROCÉDÉ DE FONCTIONNEMENT D'UN DISPOSITIF DE DÉTECTION

(30) Priorität: 18.06.2014 DE 102014211706
(43) Veröffentlichungstag der Anmeldung: 23.12.2015
(73) Patentinhaber: ROBERT BOSCH GMBH, 70442 Stuttgart (DE)
(72) Erfinder: Neul, Reinhard, 70567 Stuttgart (DE); Hoeppner, Christian, 70197 Stuttgart (DE); Meisel, Daniel Christoph, 72770 Reutlingen (DE)

(56) Entgegenhaltungen:
- WO-A1-2007/086849
- DE-A1-102009 003 217
- US-A1- 2013 247 669

## Beschreibung

Die Erfindung betrifft eine Sensorvorrichtung. Ebenso betrifft die Erfindung ein Verfahren zum Betreiben einer Sensorvorrichtung mit mindestens einer Antriebsmasse und mindestens einer Detektionsmasse, welche über zumindest eine Koppelstruktur an die mindestens einen Antriebsmasse gekoppelt ist. Des Weiteren betrifft die Erfindung ein Verfahren zum Ermitteln einer physikalischen Größe bezüglich einer Rotation eines Körpers.

### Stand der Technik

In der DE 10 2007 054 505 A1 ist ein Drehratensensor beschrieben. Der Drehratensensor umfasst ein Substrat und mindestens eine als Antriebsrahmen ausgebildete Antriebsmasse, welche mittels mindestens einer Antriebs-Kammstruktur in eine harmonische Schwingbewegung entlang einer vorgegebenen Antriebsrichtung versetzbar ist. Die harmonische Schwingbewegung des jeweiligen Antriebsrahmens kann über daran befestigte kapazitive Antriebs-Detektions-Kammstrukturen detektiert werden. Mindestens eine Detektionsmasse ist derart an je einem Antriebsrahmen gekoppelt, dass die mindestens eine Detektionsmasse bei einer Rotation der Sensorvorrichtung um eine vorgegebene sensitive Achse in eine nachweisbare Detektionsbewegung versetzbar ist. Unter der Berücksichtigung der ermittelten Detektionsbewegung soll eine Drehrate messbar sein.

### Offenbarung der Erfindung

Die Erfindung schafft eine Sensorvorrichtung mit den Merkmalen des Anspruchs 1, ein Verfahren zum Betreiben einer Sensorvorrichtung mit den Merkmalen des Anspruchs 12 und ein Verfahren zum Ermitteln einer physikalischen Größe bezüglich einer Rotation eines Körpers mit den Merkmalen des Anspruchs 14.

### Vorteile der Erfindung

Die vorliegende Erfindung ermöglicht eine genauere und fehlerfreiere Festlegung der mindestens einen physikalischen Größe bezüglich der Rotation der Sensorvorrichtung (bzw. eines Körpers mit der befestigten Sensorvorrichtung). Dies ermöglicht die vorliegende Erfindung durch die zusätzliche Berücksichtigung der Folgebewegung-Information bei der Festlegung der mindestens einen physikalischen Größe, wobei als Folgebewegung-Information eine direkt festgestellte/gemessene Information bezüglich der mindestens einen Folgebewegung der mindestens einen Detektionsmasse und/oder der mindestens einen Teilmasse nutzbar ist. Eine derartige Folgebewegung-Information ist genauer als eine durch Ermitteln der mindestens einen harmonischen Schwingbewegung der mindestens einen Antriebsmasse abgeleitete wahrscheinliche Information bezüglich der mindestens einen Folgebewegung der mindestens einen Detektionsmasse und/oder der mindestens einen Teilmasse. Damit kann auch die mindestens eine physikalische Größe genauer und fehlerfreier festgelegt werden.

Insbesondere ermöglicht die vorliegende Erfindung eine Demodulation der Detektionsbewegung-Information mittels der gewonnenen Folgebewegung-Information anstelle einer herkömmlichen Demodulation der Detektionsbewegung-Information mittels einer durch Ermitteln der harmonischen Schwingbewegung der mindestens einen Antriebsmasse abgeleiteten Information. Auf diese Weise berücksichtigt die vorliegende Erfindung, dass Abweichungen zwischen der mindestens einen harmonischen Schwingbewegung der mindestens einen Antriebsmasse und mindestens einer daraus resultierenden Schwingung der mindestens einen Detektionsmasse und/oder der mindestens einen Teilmasse auftreten können. Diese Erkenntnis verbessert die Festlegung der mindestens einen physikalischen Größe.

In einer vorteilhaften Ausführungsform ist die mindestens eine Antriebsmasse derart an der Halterung angebunden, dass die mindestens eine Antriebsmasse mittels mindestens einer Aktoreinrichtung der Sensorvorrichtung in Bezug zu der Halterung in die mindestens eine harmonische Schwingbewegung entlang der Antriebsrichtung versetzbar ist. Dies gewährleistet eine verlässliche Anregung der mindestens einen Folgebewegung der mindestens einen Detektionsmasse.

In einer vorteilhaften Ausführungsform umfasst die Sensorvorrichtung zwei Antriebsmassen als die mindestens eine Antriebsmasse, welche mittels der mindestens einen Aktoreinrichtung in zwei zueinander antiparallele harmonische Schwingbewegungen entlang der Antriebsrichtung in Bezug zu der Halterung versetzbar sind. Unter den zwei zueinander antiparallelen harmonischen Schwingbewegungen können gegenphasige/um 180° phasenverschobene Schwingbewegungen (mit gleicher Amplitude und gleicher Periode) verstanden werden.

Natürlich kann die Sensorvorrichtung auch mehr als zwei Antriebsmassen und/oder mehr als zwei Detektionsmassen umfassen. Beispielsweise kann die Sensorvorrichtung als zwei- oder dreikanaliger Drehratensensor je ein Paar von Antriebsmassen pro Kanal und/oder je ein Paar von Detektionsmassen pro Kanal haben. In einer weiteren vorteilhaften Ausführungsform umfasst die Sensorvorrichtung vier Antriebsmassen und vier Detektionsmassen, welche zum Nachweisen/Untersuchen einer Rotation der Sensorvorrichtung um eine vorgegebene Achse einsetzbar sind.

Vorteilhafterweise umfasst die Sensorvorrichtung in diesem Fall zwei Detektionsmassen als die mindestens eine Detektionsmasse, welche über je eine Koppelstruktur derart an jeweils eine der zwei Antriebsmassen gekoppelt sind, dass die zwei Detektionsmassen während der zueinander antiparallelen harmonischen Schwingbewegungen der zwei Antriebsmassen mittels der Corioliskraft in zwei zueinander antiparallele Detektionsbewegungen entlang der Detektionsrichtung in Bezug zu der Halterung versetzbar sind. Somit können auch die Detektionsbewegungen der zwei Detektionsmassen gegenphasig/um 180° phasenverschoben (bei gleicher Amplitude und gleicher Periode) sein. Derartige Detektionsbewegungen der zwei Antriebsmassen lassen sich leicht von unerwünschten Störbewegungen der zwei Detektionsmassen, welche auf ein Verbiegen/Verformen der Sensorvorrichtung oder auf eine Beschleunigung der Sensorvorrichtung in Detektionsrichtung zurückzuführen sind, unterscheiden. Insbesondere lassen sich in diesem Fall die unerwünschten Störbewegungen der zwei Detektionsmassen, bzw. die daraus resultierenden Signale, leicht "herausfiltern". Die antiparallelen harmonischen Schwingbewegungen der zwei Antriebsmassen und die antiparallelen Detektionsbewegungen der zwei Detektionsmassen ermöglichen eine genauere und fehlerfreie Festlegung der mindestens einen physikalischen Größe.

In einer bevorzugten Ausführungsform umfasst die Sensorvorrichtung mindestens eine Detektionsbewegung-Messeinrichtung, mittels welcher eine Detektionsbewegung-Information bezüglich der mindestens einen ausgeführten oder unterdrückten Detektionsbewegung der mindestens einen Detektionsmasse ermittelbar ist, wobei die Sensorvorrichtung zusätzlich eine Auswerteeinrichtung umfasst, mittels welcher zumindest unter Berücksichtigung der bereitgestellten Detektionsbewegung-Information und der bereitgestellte Folgebewegung-Information zumindest eine physikalische Größe bezüglich einer Rotation der Sensorvorrichtung festlegbar und ausgebbar ist.

Vorzugsweise ist die mindestens eine Folgebewegung-Detektionseinrichtung dazu ausgelegt, die Folgebewegung-Information unabhängig von der mindestens einen harmonischen Schwingbewegung der mindestens einen Antriebsmasse zu ermitteln. Darunter kann verstanden werden, dass die Ermittlung der Folgebewegung-Information kein Ableiten einer (lediglich wahrscheinlichen) Folgebewegung-Information aus einer ermittelten Information bezüglich der mindestens einen harmonischen Schwingbewegung der mindestens einen Antriebsmasse ist. Stattdessen erfolgt das Ermitteln der Folgebewegung-Information durch ein (direktes) Messen an der mindestens einen Detektionsmasse und/oder an der mindestens einen Teilmasse.

Beispielsweise ist die mindestens eine Folgebewegung-Detektionseinrichtung dazu ausgelegt, die Folgebewegung-Information mittels mindestens einer zwischen zumindest einem Teil der mindestens einen Detektionsmasse und/oder der mindestens einen Teilmasse und mindestens einer an der Halterung angeordneten Gegenelektrode anliegenden Spannung oder Kapazität, mittels einer piezoelektrischen Auswertung
und/oder mittels einer piezoresistiven Auswertung zu ermitteln. Die Folgebewegung-Detektionseinrichtung ist somit vielfältig ausbildbar, ohne dass die Folgebewegung-Detektionseinrichtung für ein Ermitteln der mindestens einen harmonischen Schwingbewegung der mindestens einen Antriebsmasse auszubilden ist.

Die mindestens eine Folgebewegung kann mindestens eine Bewegung der mindestens einen Detektionsmasse und/oder der mindestens einen Teilmasse in Bezug zu der Halterung oder in Bezug zu der mindestens einen Antriebsmasse sein. Auch dies steigert die Möglichkeiten zum Ausbilden der mindestens einen Folgebewegung-Detektionseinrichtung.

Beispielsweise kann die mindestens eine Detektionsmasse derart über die zumindest eine Koppelstruktur an die mindestens eine Antriebsmasse gekoppelt sein, dass die mindestens eine Detektionsmasse während der mindestens einen harmonischen Schwingbewegung der mindestens einen Antriebsmasse in die mindestens eine Folgebewegung entlang der Antriebsrichtung versetzbar ist. Eine Information bezüglich der mindestens einen Folgebewegung der mindestens einen Detektionsmasse kann in diesem Fall als Folgebewegung-Information mittels der mindestens einen Folgebewegung-Detektionseinrichtung ermittelt werden.

Als Alternative dazu kann die mindestens eine Detektionsmasse auch derart über die zumindest eine Koppelstruktur mit der je einen Teilmasse an die mindestens eine Antriebsmasse gekoppelt sein, dass die mindestens eine Teilmasse während der mindestens einen harmonischen Schwingbewegung der mindestens einen Antriebsmasse in die mindestens eine Folgebewegung entlang der Antriebsrichtung versetzbar ist. In diesem Fall wird die mindestens eine Folgebewegung der mindestens einen Teilmasse zur Ermittlung der mindestens einen Folgebewegung-Information mittels der mindestens einen Folgebewegung-Detektionseinrichtung untersucht. Vorzugsweise ist in diesem Fall die mindestens eine Detektionsmasse derart über mindestens eine Unterstruktur der zumindest einen Koppelstruktur mit der mindestens einen Teilmasse gekoppelt, dass die mindestens eine Detektionsmasse während der mindestens einen harmonischen Schwingbewegung der mindestens einen Antriebsmasse und der mindestens einen Folgebewegung der mindestens einen Teilmasse lediglich in die zumindest eine Detektionsbewegung, jedoch nicht/kaum in die Folgebewegung versetzbar ist. Eine derartige Ankopplung der mindestens einen Detektionsmasse an die mindestens eine Antriebsmasse über die zumindest eine Teilmasse kann das Ermitteln der Detektionsbewegung-Information verbessern, bzw. Störungen unterdrücken.

Die Sensorvorrichtung kann z. B. ein Drehratensensor sein. Die Sensorvorrichtung kann insbesondere ein zwei- oder dreikanaliger Drehratensensor sein. Ein derartiger Drehratensensor umfasst je ein Paar von Detektionsmassen pro Kanal, welche derart mit einer Antriebsstruktur gekoppelt sind, dass Drehraten um zwei oder drei zueinander senkrecht ausgerichteten Achsen detektierbar sind. Somit kann die Sensorvorrichtung für eine Vielzahl von Verwendungsmöglichkeiten eingesetzt werden.

Die oben ausgeführten Vorteile sind auch gewährleistet bei einem Ausführen des entsprechenden Verfahrens zum Betreiben einer Sensorvorrichtung mit mindestens einer Antriebsmasse und mindestens einer Detektionsmasse, welche über zumindest eine Koppelstruktur an die mindestens einen Antriebsmasse gekoppelt ist. Das Verfahren ist gemäß den oben beschriebenen Ausführungsformen der Sensorvorrichtung weiterbildbar.

Des Weiteren sind die oben beschriebenen Vorteile auch durch ein Ausführen des korrespondierenden Verfahrens zum Ermitteln einer physikalischen Größe bezüglich einer Rotation eines Körpers realisierbar. Auch das Verfahren zum Ermitteln der physikalischen Größe ist gemäß den oben beschriebenen Ausführungsformen der Sensorvorrichtung weiterbildbar.

### Kurze Beschreibung der Zeichnungen

Weitere Merkmale und Vorteile der vorliegenden Erfindung werden nachfolgend anhand der Figuren erläutert. Es zeigen:
- Fig. 1: eine schematische Darstellung einer ersten Ausführungsform der Sensorvorrichtung;
- Fig. 2: eine schematische Darstellung einer zweiten Ausführungsform der Sensorvorrichtung; und
- Fig. 3: ein Flussdiagramm zum Erläutern einer Ausführungsform des Verfahrens zum Ermitteln einer physikalischen Größe bezüglich einer Rotation eines Körpers.

### Ausführungsformen der Erfindung

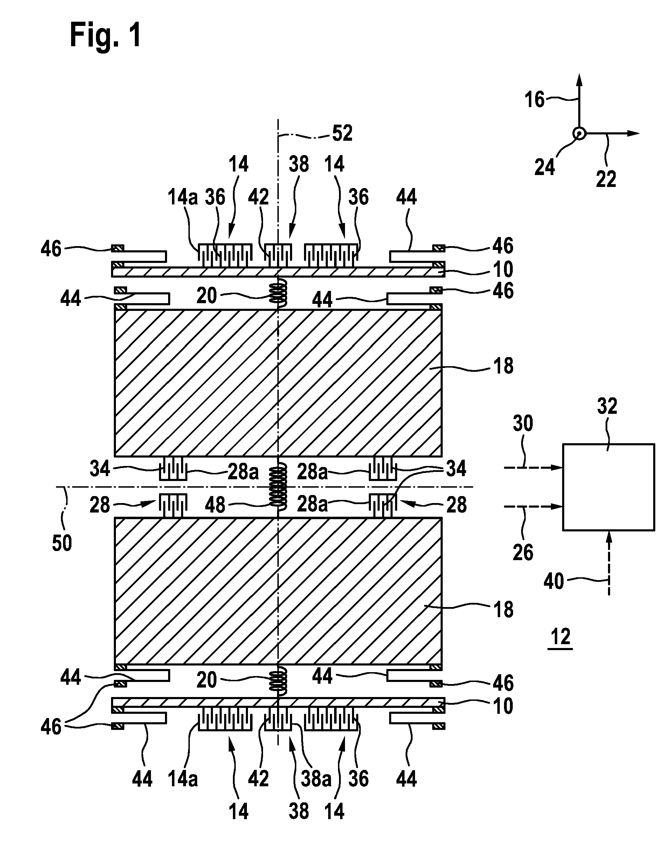

Fig. 1 zeigt eine schematische Darstellung einer ersten Ausführungsform der Sensorvorrichtung.

Die in Fig. 1 schematisch dargestellte Sensorvorrichtung hat mindestens eine Antriebsmasse 10. Vorzugsweise ist die mindestens eine Antriebsmasse 10 derart an einer Halterung 12 der Sensorvorrichtung angebunden, dass die mindestens eine Antriebsmasse 10 mittels mindestens einer Aktoreinrichtung 14 der Sensorvorrichtung in Bezug zu der Halterung 12 in mindestens eine harmonische Schwingbewegung entlang einer Antriebsrichtung 16 versetzbar ist. Außerdem weist die Sensorvorrichtung mindestens eine Detektionsmasse 18 auf. Die mindestens eine Detektionsmasse 18 ist derart über zumindest eine Koppelstruktur 20 an die mindestens eine Antriebsmasse 10 gekoppelt, dass die mindestens eine Detektionsmasse 18 während der mindestens einen harmonischen Schwingbewegung der mindestens einen Antriebsmasse 10 mittels einer Corioliskraft in mindestens eine Detektionsbewegung entlang einer vorgegebenen Detektionsrichtung 24 in Bezug zu der Halterung 12 versetzbar ist.

Eine die mindestens eine Detektionsbewegung der mindestens einen Detektionsmasse 18 bewirkende Corioliskraft tritt auf, sofern die Sensorvorrichtung (bzw. ein Körpers mit der daran angebrachten Sensorvorrichtung) während der mindestens einen harmonischen Schwingbewegung der mindestens einen Antriebsmasse 10 eine (Teil-)Rotation um eine vorgegebene sensitive Achse 22 der Sensorvorrichtung ausführt. Die Achsen 16, 22 und 24 können deshalb senkrecht zueinander ausgerichtet sein.

In der Ausführungsform der Fig. 1 ist die mindestens eine Koppelstruktur 20 als je eine Koppelfeder 20 ausgebildet, über welche je eine Antriebsmasse 10 mit jeweils einer Detektionsmasse 18 verbunden ist. Ein anderes Ausbildungsbeispiel aus einer Vielzahl von Ausbildungsmöglichkeiten für die mindestens eine Koppelstruktur 20 wird unten noch beschrieben.

In der Ausführungsform der Fig. 1 ist die von der Corioliskraft bewirkte/auslösbare mindestens eine Detektionsbewegung der mindestens einen Detektionsmasse 18 mittels mindestens einer (in Fig. 1 nicht dargestellten) Detektionsbewegung-Messeinrichtung ermittelbar. Die Detektionsbewegung-Messeinrichtung kann sowohl für einen Open-Loop-Sensor als auch als Closed-Loop-Sensor als Sensorvorrichtungen ausgebildet sein. (Bei Open-Loop-Sensoren wird die mindestens eine Detektionsbewegung zugelassen und direkt gemessen. Bei Closed-Loop-Sensoren wird der mindestens einen Detektionsbewegung durch das Einkoppeln geeigneter Kräfte entgegengewirkt, wobei die dazu aufzubringenden Kräfte ermittelt werden.) Die mindestens eine Detektionsbewegung-Messeinrichtung ist in beiden Fällen dazu ausgelegt, eine Detektionsbewegung-Information 26 bezüglich der mindestens einen ausgeführten oder unterdrückten Detektionsbewegung der mindestens einen Detektionsmasse 18 zu ermitteln und bereitzustellen. Es wird allerdings darauf hingewiesen, dass die in Fig. 1 wiedergegebene Ausstattung der Sensorvorrichtung mit der Detektionsbewegung-Messeinrichtung nur beispielhaft zu interpretieren ist.

Die Sensorvorrichtung weist vor Allem mindestens eine Folgebewegung-Detektionseinrichtung 28 auf. In der Ausführungsform der Fig. 1 ist die mindestens eine Folgebewegung-Detektionseinrichtung 28 dazu ausgelegt, eine Folgebewegung-Information 30 bezüglich mindestens einer mittels der mindestens einen harmonischen Schwingbewegung der mindestens einen Antriebsmasse angeregten Folgebewegung der mindestens einen Detektionsmasse 18 entlang der (von der Detektionsrichtung 24 abweichenden) Antriebsrichtung 16 zu ermitteln. Die mindestens eine Detektionsmasse 18 ist dazu derart über die zumindest eine Koppelstruktur 20 an die mindestens eine Antriebsmasse 10 gekoppelt, dass die mindestens eine Detektionsmasse 18 während der mindestens einen harmonischen Schwingbewegung der mindestens einen Antriebsmasse 10 in die mindestens eine Folgebewegung entlang der Antriebsrichtung 16 versetzbar ist. Es wird darauf hingewiesen, dass die mindestens eine Folgebewegung-Detektionseinrichtung 28 dazu ausgelegt ist, die Folgebewegung-Information 30 unabhängig von der mindestens einen harmonischen Schwingbewegung der mindestens einen Antriebsmasse 10 zu ermitteln. Das Ermitteln der Folgebewegung- Information 30 erfolgt somit nicht durch ein bloßes Ableiten von der Folgebewegung- Information 30 aus einer Ermittlung bezüglich der mindestens einen harmonischen Schwingbewegung der mindestens einen Antriebsmasse 10. Stattdessen kann unter dem Ermitteln der Folgebewegung- Information 30 ein direktes Ermitteln/Messen der Folgebewegung- Information 30 verstanden werden.

Bevorzugter Weise weist die Sensorvorrichtung auch eine Auswerteeinrichtung 32 auf, mittels welcher zumindest eine physikalische Größe bezüglich der die Corioliskraft auslösenden (Teil-) Rotation der Sensorvorrichtung/des Körpers festlegbar und ausgebbar ist. Die mindestens eine mittels der Auswerteeinrichtung 32 festlegbare physikalische Größe kann beispielsweise eine Drehgeschwindigkeit und/oder die Corioliskraftkraft sein. Die Sensorvorrichtung kann somit als Drehratensensor eingesetzt werden. Somit ist eine Vielzahl von Verwendungsmöglichkeiten für die Sensorvorrichtung möglich.

Die Auswerteeinrichtung 32 ist außerdem dazu ausgelegt, bei der Festlegung der zumindest einen physikalischen Größe zumindest die bereitgestellte Detektionsbewegung-Information 26 und die bereitgestellte Folgebewegung-Information 30 zu berücksichtigen. Durch das Heranziehen/Mitauswerten der Folgebewegung-Information 30 bei der Festlegung der mindestens einen physikalischen Größe ist mitberücksichtigbar, dass zwischen der mindestens einen harmonischen Schwingbewegung der mindestens einen Antriebsmasse 10 und der resultierenden mindestens einen Folgebewegung der mindestens einen Detektionsmasse 18 Abweichungen auftreten können. Derartige Abweichungen können Amplituden- und/oder Phasenunterschiede zwischen der mindestens einen harmonischen Schwingbewegung der mindestens einen Antriebsmasse 10 und der mindestens einen resultierenden Folgebewegung der mindestens einen Detektionsmasse 18 sein. Da in die Corioliskraft, welche die mindestens eine Detektionsbewegung der mindestens einen Detektionsmasse 18 bewirkt, die mindestens eine Folgebewegung der mindestens einen Detektionsmasse 18 (und nicht die mindestens eine harmonische Schwingbewegung der mindestens einen Antriebsmasse 10) eingeht, ist durch die Mitberücksichtigung der ermittelten Folgebewegung-Information 30 eine genauere und fehlerfreiere Festlegung der mindestens einen physikalischen Größe möglich. Solche Amplituden- und/oder Phasenunterschiede können beispielsweise durch mechanische Nicht-Linearitäten, die Anregung von parasitären Eigenmoden oder Steifigkeitsänderungen bei Temperaturgängen entstehen.

Die Auswerteeinrichtung 32 kann insbesondere dazu ausgelegt sein, eine Demodulation der Detektionsbewegung-Information 26 mittels der Folgebewegung-Information 30 auszuführen. Dies ist aufgrund der in dem vorausgehenden Absatz beschriebenen Gründe vorteilhafter als die herkömmliche Demodulation eines der Detektionsbewegung-Information 26 entsprechenden Signals mittels eines bei der Untersuchung der mindestens einen harmonischen Schwingung der mindestens einen Antriebsmasse 10 gewonnenen weiteren Signals. Insbesondere sogenannte Quadraturbewegungen der mindestens einen Detektionsmasse 18, welche aufgrund von mechanischen Inperfektionen in der Sensorvorrichtung auftreten können, lassen sich mittels der Mitberücksichtigung der Folgebewegung-Information 30 leicht und verlässlich als solche erkennen und herausfiltern. Da Quadraturbewegungen größere Amplituden als die mindestens eine Detektionsbewegung der mindestens einen Detektionsmasse 18 haben können, ist es vorteilhaft, wenn sie mittels der Auswerteeinrichtung 32 verlässlich heraustrennbar/herausfilterbar sind. Dazu kann die Auswerteeinrichtung 32 insbesondere die Tatsache nutzen, dass die periodischen Quadraturbewegungen und die maximalen Amplituden der mindestens einen Detektionsbewegung der mindestens einen Detektionsmasse 18 um 90° in der Phase zueinander verschoben sind. Damit erleichtert die Mitberücksichtigung der Folgebewegung-Information 30 das Heraustrennen/Herausfiltern von Quadraturbewegungen signifikant.

Die mindestens eine Folgebewegung-Detektionseinrichtung 28, welche das vorteilhafte Ermitteln der Folgebewegung-Information 30 ermöglicht, kann beispielsweise dazu ausgelegt sein, die Folgebewegung-Information 30 mittels mindestens einer (direkt) zwischen zumindest einem Teil der mindestens einen Detektionsmasse 18 und mindestens einer an der Halterung 12 angeordneten Gegenelektrode 28a anliegenden Spannung oder Kapazität, mittels einer piezoelektrischen Auswertung
und/oder mittels einer piezoresistiven Auswertung zu ermitteln. In der Ausführungsform der Fig. 1 ist die mindestens eine Folgebewegung-Detektionseinrichtung 28 kapazitiv ausgelegt. Dazu umfasst die mindestens eine Folgebewegung-Detektionseinrichtung 28 mindestens eine unverstellbar/fest an der Halterung 12 befestigte Gegenelektrode 28a, welche speziell kammförmig ausgebildet ist. An der mindestens einen Detektionsmasse 18 (fest) angeordnete Elektrodenfinger 34 greifen in die mindestens eine Gegenelektrode 28a ein, so dass eine (direkt) zwischen den Elektrodenfingern 34 der mindestens einen Detektionsmasse 18 und der mindestens einen Gegenelektrode 28a anliegende Spannung oder Kapazität ermittelbar ist. Es wird jedoch darauf hingewiesen, dass unter der mindestens einen Folgebewegung-Detektionseinrichtung 28 nicht nur eine kapazitive Kammstruktur zu verstehen ist. Beispielsweise kann die mindestens eine Folgebewegung-Detektionseinrichtung 28 auch mindestens eine Plattenelektrode umfassen. Ebenso können piezoelektrische, piezoresistive, elektromagnetische und/oder magnetostriktive Strukturen für die mindestens eine Folgebewegung-Detektionseinrichtung 28 eingesetzt werden.

Beispielhaft ist in der Ausführungsform der Fig. 1 auch die mindestens eine Aktoreinrichtung 14 kapazitiv ausgebildet. Speziell umfasst die mindestens eine Aktoreinrichtung 14 mindestens eine fest/unverstellbar an der Halterung 12 angeordnete kammförmige Gegenelektrode 14a, in welcher an der mindestens einen Antriebsmasse 10 befestigte Elektrodenfinger 36 eingreifen. Ebenso kann die mindestens eine Aktoreinrichtung 14 jedoch auch mindestens einen kapazitiven Plattenantrieb, mindestens einen piezoelektrischen Antrieb und/oder mindestens einen elektromagnetischen Antrieb umfassen.

In der Ausführungsform der Fig. 1 umfasst die mindestens eine (nicht dargestellte) Detektionsbewegung-Messeinrichtung zur Ermittlung der Detektionsbewegung-Information 26 mindestens eine Plattenelektrode, welche in Detektionsrichtung 24 beabstandet zu der mindestens einen Detektionsmasse 18 fest/unverstellbar an der Halterung 12 angeordnet ist. Insbesondere kann auf diese Weise auch mindestens eine Detektionsbewegung entlang der Detektionsrichtung 24, welche aus der Halterung 12 heraus gerichtet ist, verlässlich detektiert werden. Die hier beschriebene Ausbildungsmöglichkeit für die mindestens eine (nicht dargestellte) Detektionsbewegung-Messeinrichtung ist jedoch nur beispielhaft zu interpretieren.

Ergänzend weist die Sensorvorrichtung der Fig. 1 auch mindestens eine Schwingbewegung-Detektionseinrichtung 38 auf, mittels welcher eine Schwingbewegung-Information 40 bezüglich der mindestens einen (tatsächlich von der mindestens einen Antriebsmasse 10 ausgeführten) harmonischen Schwingbewegung entlang der Antriebsrichtung 16 ermittelbar ist. Die Schwingbewegung-Information 40 kann zusätzlich zu den Informationen 26 und 30 von der Auswerteeinrichtung 32 ausgewertet werden. Beispielsweise kann die Auswerteeinrichtung 32 dazu ausgelegt sein, anhand der Informationen 30 und 40 zu erkennen, ob die mindestens eine Folgebewegung der mindestens einen Detektionsmasse 18 der mindestens einen harmonischen Schwingbewegung der mindestens einen Antriebsmasse 10 entspricht. Stellt die Auswerteeinrichtung 32 dabei fest, dass signifikante Abweichungen zwischen der mindestens einen harmonischen Schwingbewegung der mindestens einen Antriebsmasse 10 und der mindestens einen Folgebewegung der mindestens einen Detektionsmasse 18 auftreten, so kann sie entweder über ein Ansteuern der mindestens einen Aktoreinrichtung 14 diese Abweichungen beheben oder zumindest zeitweise eine Funktionsbeeinträchtigung der Sensorvorrichtung feststellen (und evtl. mittels geeigneter Auswerteschaltung ausgleichen). Alternativ besteht auch die Möglichkeit, dass die Auswerteeinrichtung 32 die Schwingbewegung-Information 40 lediglich zur Steuerung der Aktoreinrichtung 14 heranzieht, während die Festlegung der mindestens einen physikalischen Größe unter Auswertung der Informationen 26 und 30 (bei Nichtberücksichtigung der Schwingbewegung-Information 40) erfolgt.

Es wird darauf hingewiesen, dass eine Ausstattung der Sensorvorrichtung mit der mindestens einen Schwingbewegung- Detektionseinrichtung 38 optional ist. Ebenso ist die in Fig. 1 dargestellte Ausbildung der mindestens einen Schwingbewegung-Detektionseinrichtung 38 mit mindestens einer fest/unterstellbar an der Halterung 12 angeordneten kammförmigen Gegenelektrode 38a, in welche an der mindestens einen Antriebsmasse 10 befestigte Elektroden 42 eingreifen, nur beispielhaft zu interpretieren. Die mindestens eine Schwingbewegung- Detektionseinrichtung 38 kann auch mit mindestens einem Plattenkondensator, piezoelektrisch, piezoresistiv, elektromagnetisch und/oder magnetostriktiv ausgebildet sein.

In der Ausführungsform der Fig. 1 sind die mindestens eine Antriebsmasse 10 und die mindestens eine Detektionsmasse 18 über mindestens eine Feder 44 mit mindestens einem Verankerungsbereich 46 an der Halterung 12 verbunden. Speziell ist jede der Massen 10 und 18 über genau zwei U-förmige Federn 44 mit genau zwei Verankerungsbereichen 46 verbunden. Sofern eine von der Corioliskraft ausgelöste Bewegung der mindestens einen Antriebsmasse 10 in die Detektionsrichtung 24 unerwünscht ist, kann diese mit der dargestellten Anbindung der mindestens einen Antriebsmasse an die Halterung 12 unterbunden werden. Die in Fig. 1 dargestellte Anbindung der Massen 10 und 18 an die Halterung 12 ist jedoch nur eine von vielen Ausführungsmöglichkeiten.

Die Sensorvorrichtung der Fig. 1 umfasst eine erste Antriebsmasse 10 und eine zweite Antriebsmasse 10 als die mindestens eine Antriebsmasse 10. Die erste Antriebsmasse 10 und die zweite Antriebsmasse 10 sind mittels der mindestens einen Aktoreinrichtung 14 in zwei zueinander antiparallele harmonische Schwingbewegungen entlang der (gleichen) Antriebsrichtung 16 in Bezug zu der Halterung 12 versetzbar. Darunter kann verstanden werden, dass die erste Antriebsmasse 10 und die zweite Antriebsmasse 10 mittels der mindestens einen Aktoreinrichtung 14 in gegenphasige/um 180° phasenverschobene Schwingbewegungen (mit gleicher Amplitude und gleicher Periode) versetzbar sind. Außerdem hat die Sensorvorrichtung als die mindestens eine Detektionsmasse 18 eine erste Detektionsmasse 18 und eine zweite Detektionsmasse 18. Die erste Detektionsmasse 18 ist über eine erste Koppelstruktur 20 an die erste Antriebsmasse 10 gebunden. Entsprechend verbindet eine zweite Koppelstruktur 20 die zweite Detektionsmasse 18 mit der zweiten Antriebsmasse 20. Die zwei Detektionsmassen 18 sind derart über die je eine Koppelstruktur 20 an die zwei Antriebsmassen 10 gekoppelt, dass die zwei Detektionsmassen 18 während der zueinander antiparallelen harmonischen Schwingbewegungen der zwei Antriebsmassen 10 mittels der Corioliskraft in zwei zueinander antiparallele Detektionsbewegungen entlang der Detektionsrichtung 24 in Bezug zu der Halterung 12 versetzbar sind. Die Detektionsbewegungen der zwei Detektionsmassen 18 sind somit (bei gleicher Amplitude und gleicher Periode) gegenphasig/um 180° phasenverschoben. Dies erleichtert ein Unterscheiden der von der Corioliskraft generierten/auslösbaren Detektionsbewegungen der zwei Detektionsmassen 18 gegenüber Stellungsänderungen der zwei Detektionsmassen 18 aufgrund einer Deformation der Sensorvorrichtung oder einer Beschleunigung der Sensorvorrichtung in Detektionsrichtung 24. Die Frequenztrennung der Eigenmoden der parallelen und antiparallelen Detektionsbewegungen der zwei Detektionsmassen 18 kann mittels einer Feder- oder Koppelstruktur 48 verbessert werden. Auf eine genauere Darstellung einer dazu geeigneten Feder- oder Koppelstruktur 48 ist in Fig. 1 jedoch verzichtet.

Die Sensorvorrichtung der Fig. 1 ist symmetrisch bezüglich einer ersten Symmetrieachse 50, auf deren erster Seite die erste Antriebsmasse 10 und die erste Detektionsmasse 18 liegen, während die zweite Antriebsmasse 10 und die zweite Detektionsmasse 18 auf der zweiten Seite der ersten Symmetrieachse 50 angeordnet sind. Außerdem weist die Sensorvorrichtung noch eine Symmetrie bezüglich einer zweiten Symmetrieachse 52, welche die Massen 10 und 18 jeweils mittig schneidet, auf. Die Ausbildbarkeit der Sensorvorrichtung ist jedoch nicht auf derartige Symmetrien limitiert. Es wird auch darauf hingewiesen, dass die Sensorvorrichtung mit beliebig vielen Antriebsmassen 10 und beliebig vielen Detektionsmassen 18 realisierbar ist.

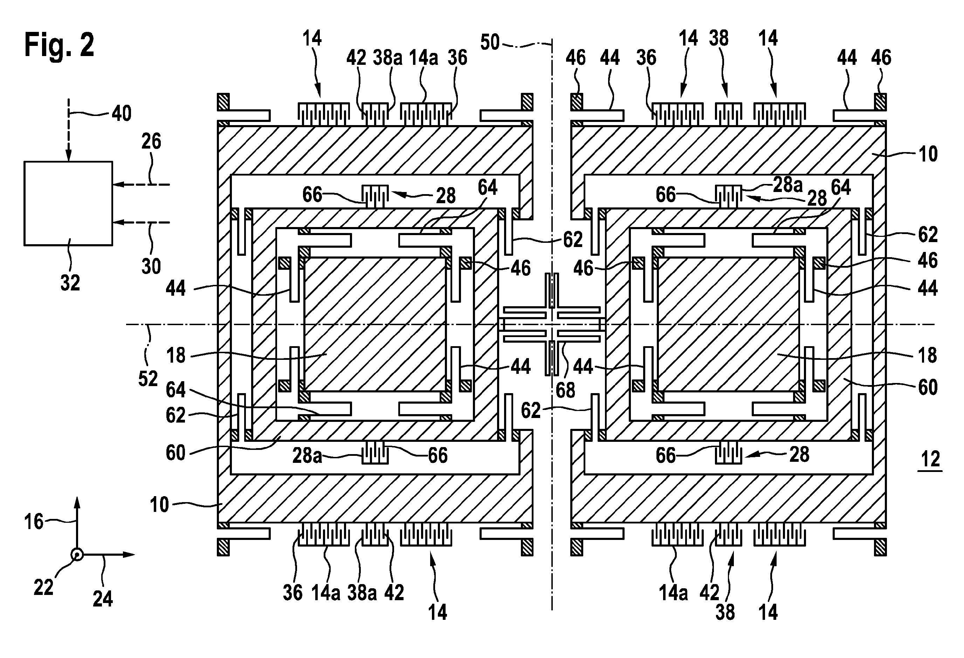

Fig. 2 zeigt eine schematische Darstellung einer zweiten Ausführungsform der Sensorvorrichtung.

Bei der in Fig. 2 schematisch dargestellten Sensorvorrichtung umfasst die mindestens eine Koppelstruktur je eine Teilmasse 60, welche über mindestens eine Unterkoppelstruktur 62 an eine zugeordnete Antriebsmasse 10 und mit einer weiteren Unterkoppelstruktur 64 an eine zugeordnete Detektionsmasse 18 angebunden ist. Speziell können die mindestens eine Antriebsmasse 10 als Antriebsrahmen und/oder die mindestens eine Teilmasse 60 als Zwischenrahmen ausgebildet sein. Die Unterkoppelstrukturen 62 und 64 können Federn, z.B. U-Federn, sein.

Die mindestens eine Detektionsmasse 18 ist bei der Ausführungsform der Fig. 2 derart über zumindest eine Koppelstruktur mit je einer Teilmasse 60 an die mindestens eine Antriebsmasse 10 gekoppelt, dass die mindestens eine Teilmasse 60 während der mindestens einen harmonischen Schwingbewegung der mindestens einen Antriebsmasse 10 in die mindestens eine Folgebewegung entlang der Antriebsrichtung 16 versetzbar ist. Vorzugsweise ist in diesem Fall die mindestens eine Teilmasse 60 auch mittels der Corioliskraft entlang der vorgegebenen Detektionsrichtung 24 in Bezug zu der Halterung 12 versetzbar. Für die mindestens eine Detektionsmasse 18 wird ein Anbindung bevorzugt, bei welcher die mindestens eine Detektionsmasse 18 lediglich (mittels der Corioliskraft) in die mindestens eine Detektionsbewegung entlang der vorgegebenen Detektionsrichtung 24 in Bezug zu der Halterung 12 versetzbar ist, während eine Bewegung der mindestens einen Detektionsmasse 18 in Bezug zu der Halterung 12 entlang der Antriebsrichtung 16 unterbunden/beschränkt ist. Um ein Mitschwingen der mindestens einen Detektionsmasse 18 zusammen mit den Massen 10 und 60 entlang der Antriebsrichtung 16 (nahezu) zu verhindern, kann die mindestens einen Detektionsmasse 18 mittels mindestens einer geeigneten Feder (wie z.B. mindestens einer U-Feder), welche für Schwingungen entlang der Antriebsrichtung 16 relativ steif ist, mit der Halterung 12 verbunden sein.

In der Ausführungsform der Fig. 2 ist die mindestens eine Folgebewegung-Detektionseinrichtung 28 dazu ausgelegt, die Folgebewegung-Information 30 bezüglich der mindestens einen mittels der mindestens einen harmonischen Schwingbewegung der mindestens einen Antriebsmasse 10 angeregten Folgebewegung der mindestens einen Teilmasse 60 entlang der Antriebsrichtung 16 (in Bezug zu der Halterung 12) zu ermitteln. Auch darunter ist ein direktes Ermitteln der Folgebewegung-Information 30, und nicht ein Ableiten der Folgebewegung-Information 30 aus einer Ermittlung der mindestens einen harmonischen Schwingbewegung der mindestens einen Antriebsmasse 10 zu verstehen. Die mindestens eine Folgebewegung-Detektionseinrichtung 28 ist vorzugsweise dazu ausgelegt, die Folgebewegung-Information 30 mittels mindestens einer (direkt) zwischen zumindest einem Teil der mindestens einen Teilmasse 60 und mindestens einer an der Halterung 12 angeordneten Gegenelektrode 28a anliegenden Spannung oder Kapazität, mittels einer piezoelektrischen Auswertung
und/oder mittels einer piezoresistiven Auswertung zu ermitteln. Lediglich beispielhaft umfasst die mindestens eine Folgebewegung-Detektionseinrichtung 28 der Fig. 2 mindestens eine unverstellbar/fest an der Halterung 12 befestigte Gegenelektrode 28a, in welche an der mindestens einen Teilmasse 60 (fest) angeordnete Elektrodenfinger 66 eingreifen. Es wird darauf hingewiesen, dass auch für die Ausführungsform der Fig. 2 mindestens eine piezoelektrische, piezoresistive, elektromagnetische, magnetostriktive und/oder mit mindestens einer Plattenelektrode ausgestattete Folgebewegung-Detektionseinrichtung 28 verwertbar ist.

Aufgrund der Ausstattung der Sensorvorrichtung der Fig. 2 mit der mindestens einen Folgebewegung-Detektionseinrichtung 28 und der Mitberücksichtigung der Folgebewegung-Information 30 durch die Auswerteeinrichtung 32 treten selbst bei einem Phasen- und/oder Amplitudenversatz zwischen der mindestens einen harmonischen Schwingbewegung der mindestens einen Antriebsmasse 10 und der mindestens einen Folgebewegung der mindestens einen Zusatzmasse 60 keine Signalverfälschungen, wie beispielsweise Offset-Sprünge oder Offset-Driften, an der mindestens einen von der Auswerteeinrichtung 32 festgelegten/bestimmten physikalischen Größe auf. Selbst bei einem Anregen von Schwingungen in Eigenmoden bei höheren Frequenzen muss keine Verschlechterung der mindestens einen festgelegten/bestimmten physikalischen Größe befürchtet werden. Stattdessen kann auch bei der Ausführungsform der Fig. 2 eine Phasenlage von den Quadraturbewegungen und den maximalen Amplituden der mindestens einen Folgebewegung korrekterweise ausgewertet werden. Ebenso kann ein Vergleich der Folgebewegung-Information 30 mit der Schwingbewegung-Information 40 dazu verwendet werden, zu erkennen, ob sich das Schwingsystem der Sensorvorrichtungen in einem fehlerhaften Schwingzustand befindet und deshalb eine Festlegung der mindestens einen physikalischen Größe kurzzeitig auszusetzen oder mittels geeigneter Auswerteschaltung zu korrigieren ist. Mittels einer Ansteuerung der mindestens einen Aktoreinrichtung 40 kann in diesem Fall der fehlerhafte Schwingungszustand schnell und leicht wieder behoben werden. Jedoch kann auch bei der Sensorvorrichtung der Fig. 2 auf die mindestens eine Schwingbewegung-Detektionseinrichtung 38 verzichtet werden.

Auch die Ausführungsform der Fig. 2 weist zwei zu antiparallelen Schwingbewegungen anregbare Antriebsmassen 10 und zwei in antiparallele Detektionsbewegungen versetzbare Detektionsmassen 18 auf. Die erste Antriebsmasse 10 ist über eine erste Koppelstruktur 20 (mit der ersten Zusatzmasse 60) mit der ersten Detektionsmasse 18 verbunden. Entsprechend dient eine zweite Koppelstruktur 20 (mit der zweiten Zusatzmasse 60) zum Ankoppeln der zweiten Detektionsmasse 18 an die zweite Antriebsmasse 10. Die erste Zusatzmasse 60 und die zweite Zusatzmasse 60 sind außerdem über eine Koppelfeder 68 miteinander verbunden, was zu einer Verbesserung der Antiparallelität der Schwingbewegungen der Sensorvorrichtung der Fig. 2 beitragen kann.

Es wird darauf hingewiesen, dass unter der mindestens einen Folgebewegung nicht nur eine Bewegung der mindestens einen Detektionsmasse 18 und/oder der mindestens einen Teilmasse 60 in Bezug zu der Halterung 12 zu verstehen ist. Stattdessen kann auch eine Bewegung der mindestens einen Detektionsmasse 18 und/oder der mindestens einen Teilmasse 60 in Bezug zu der mindestens einen Antriebsmasse 10 unter der mindestens einen Folgebewegung verstanden werden. Die mindestens eine Folgebewegung-Detektionseinrichtung 28 kann somit auch dazu ausgelegt sein, die Folgebewegung-Information 30 bezüglich der Bewegung der mindestens einen Detektionsmasse 18 und/oder der mindestens einen Teilmasse 60 in Bezug zu der mindestens einen Antriebsmasse 10 zu ermitteln. In diesem Fall kann die mindestens eine Folgebewegung-Detektionseinrichtung 28 zumindest teilweise an der mindestens einen Antriebsmasse 10 ausgebildet sein.

In einer Weiterbildung können die oben beschriebenen Sensorvorrichtungen auch als ein zwei- oder dreikanaliger Drehratensensor ausgebildet sein. Ein derartiger Drehratensensor umfasst je ein Paar von Detektionsmassen 18 pro Kanal, welche derart mit einer Antriebsstruktur gekoppelt sind, dass Drehraten um zwei oder drei zueinander senkrecht ausgerichtete Achsen detektierbar sind. Die mindestens eine Folgebewegung-Detektionseinrichtung 28, mittels welcher die Detektionsbewegung-Information 26 ermittelbar ist, ist in diesem Fall an jedem der einzelnen Kanäle angebracht und erzeugt individuelle Signale für jeden einzelnen Kanal.

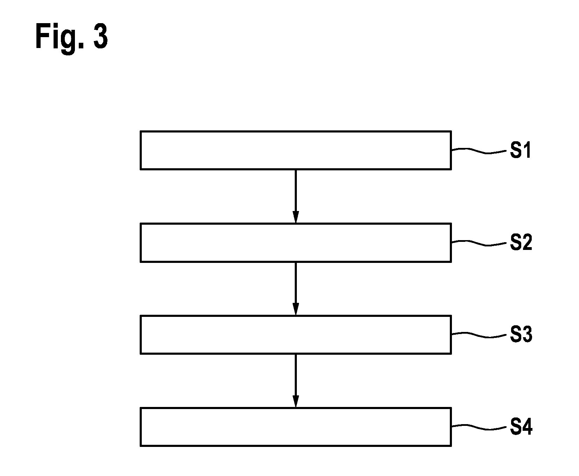

Fig. 3 zeigt ein Flussdiagramm zum Erläutern einer Ausführungsform des Verfahrens zum Ermitteln einer physikalischen Größe bezüglich einer Rotation eines Körpers.

Das im Weiteren beschriebene Verfahren kann beispielsweise mittels einer der oben erläuterten Sensorvorrichtungen ausgeführt werden. Es wird jedoch darauf hingewiesen, dass die Ausführbarkeit des Verfahrens nicht auf die Verwendung einer derartigen Sensorvorrichtung limitiert ist.

Das Verfahren zum Ermitteln der physikalischen Größe ist eine Weiterbildung eines die Verfahrensschritte S1 und S2 umfassenden Verfahrens zum Betreiben einer Sensorvorrichtung mit mindestens einer Antriebsmasse und mindestens einer Detektionsmasse, welche über zumindest eine Koppelstruktur an die mindestens einen Antriebsmasse gekoppelt ist. In dem Verfahrensschritt S1 wird die mindestens eine Antriebsmasse in mindestens eine harmonische Schwingbewegung versetzt. Vorzugsweise wird die mindestens eine Antriebsmasse in die mindestens eine harmonische Schwingbewegung entlang einer Antriebsrichtung in Bezug zu einer Halterung versetzt. Der Verfahrensschritt S1 wird derart ausgeführt, dass die mindestens eine Detektionsmasse während der mindestens einen harmonischen Schwingbewegung der mindestens einen Antriebsmasse mittels einer Corioliskraft in mindestens eine Detektionsbewegung entlang einer vorgegebene Detektionsrichtung in Bezug zu der Halterung versetzbar wird. Bezüglich der verschiedenen zum Ausführen des Verfahrensschritts S1 geeigneten Ausführungsformen für die mindestens eine Antriebsmasse, die zumindest eine Koppelstruktur und die mindestens eine Detektionsmasse wird auf die oberen Beschreibungen verwiesen.

In dem weiteren Verfahrensschritt S2 wird eine Folgebewegung-Information bezüglich mindestens einer mittels der mindestens einen harmonischen Schwingbewegung der mindestens einen Antriebsmasse angeregten Folgebewegung der mindestens einen Detektionsmasse und/oder mindestens einer Teilmasse der Koppelstruktur entlang der (von der Detektionsrichtung abweichenden) Antriebsrichtung ermittelt. Dazu geeignete Sensoreinrichtungen sind oben schon erläutert.

Als Weiterbildung wird in einem Verfahrensschritt S3 auch eine Detektionsbewegung-Information bezüglich der mindestens einen ausgeführten oder unterdrückten Detektionsbewegung der mindestens einen Detektionsmasse ermittelt. Auch dazu können die oben schon erläuterten Sensoreinrichtungen verwendet werden.

Das Festlegen der physikalischen Größe erfolgt in einem Verfahrensschritt S4, wobei beim Festlegen der physikalischen Größe zumindest die ermittelte Folgebewegung-Information berücksichtigt wird. Bevorzugter Weise wird beim Festlegen der physikalischen Größe die ermittelte Detektionsbewegung-Information zusätzlich zu der Folgebewegung-Information berücksichtigt. Auf eine erneute Beschreibung der Vorteile, welche durch das Ausführen der Verfahrensschritte S1 bis S4 gewonnen werden, wird hier verzichtet.

## Patentansprüche

1. Sensorvorrichtung mit
mindestens einer Antriebsmasse (10); und
mindestens einer Detektionsmasse (18), wobei die mindestens eine Detektionsmasse (18) derart über zumindest eine Koppelstruktur (20) an der mindestens einen Antriebsmasse (10) gekoppelt ist, dass die mindestens eine Detektionsmasse (18) während mindestens einer harmonischen Schwingbewegung der mindestens einen Antriebsmasse (10) mittels einer Corioliskraft in mindestens eine Detektionsbewegung entlang einer vorgegebene Detektionsrichtung (24) in Bezug zu einer Halterung (12) der Sensorvorrichtung versetzbar ist;
**gekennzeichnet durch**
mindestens eine Folgebewegung-Detektionseinrichtung (28), mittels welcher eine Folgebewegung-Information (30) bezüglich mindestens einer mittels der mindestens einen harmonischen Schwingbewegung der mindestens einen Antriebsmasse (10) angeregten Folgebewegung der mindestens einen Detektionsmasse (18) und/oder mindestens einer Teilmasse (60) der Koppelstruktur (20) entlang einer von der Detektionsrichtung (24) abweichenden Antriebsrichtung (16) ermittelbar ist.

2. Sensorvorrichtung nach Anspruch 1, wobei die mindestens eine Antriebsmasse (10) derart an der Halterung (12) angebunden ist, dass die mindestens eine Antriebsmasse (10) mittels mindestens einer Aktoreinrichtung (14) der Sensorvorrichtung in Bezug zu der Halterung (12) in die mindestens eine harmonische Schwingbewegung entlang der Antriebsrichtung (16) versetzbar ist.

3. Sensorvorrichtung nach Anspruch 2, wobei die Sensorvorrichtung zwei Antriebsmassen (10) als die mindestens eine Antriebsmasse (10) umfasst, welche mittels der mindestens einen Aktoreinrichtung (14) in zwei zueinander antiparallele harmonische Schwingbewegungen entlang der Antriebsrichtung (16) in Bezug zu der Halterung (12) versetzbar sind.

4. Sensorvorrichtung nach Anspruch 3, wobei die Sensorvorrichtung zwei Detektionsmassen (18) als die mindestens eine Detektionsmasse (18) umfasst, welche über je eine Koppelstruktur (20) derart an jeweils eine der zwei Antriebsmassen (10) gekoppelt sind, dass die zwei Detektionsmassen (18) während der zueinander antiparallelen harmonischen Schwingbewegungen der zwei Antriebsmassen (10) mittels der Corioliskraft in zwei zueinander antiparallele Detektionsbewegungen entlang der Detektionsrichtung (24) in Bezug zu der Halterung (12) versetzbar sind.

5. Sensorvorrichtung nach einem der vorhergehenden Ansprüche, wobei die Sensorvorrichtung mindestens eine Detektionsbewegung-Messeinrichtung umfasst, mittels welcher eine Detektionsbewegung-Information (26) bezüglich der mindestens einen ausgeführten oder unterdrückten Detektionsbewegung der mindestens einen Detektionsmasse (18) ermittelbar ist, und wobei die Sensorvorrichtung zusätzlich eine Auswerteeinrichtung (32) umfasst, mittels welcher zumindest unter Berücksichtigung der bereitgestellten Detektionsbewegung-Information (26) und der bereitgestellte Folgebewegung-Information (30) zumindest eine physikalische Größe bezüglich einer Rotation der Sensorvorrichtung festlegbar und ausgebbar ist.

6. Sensorvorrichtung nach einem der vorhergehenden Ansprüche, wobei die mindestens eine Folgebewegung-Detektionseinrichtung (28) dazu ausgelegt ist, die Folgebewegung-Information (30) unabhängig von der mindestens einen harmonischen Schwingbewegung der mindestens einen Antriebsmasse (10) zu ermitteln.

7. Sensorvorrichtung nach einem der vorhergehenden Ansprüche, wobei die mindestens eine Folgebewegung-Detektionseinrichtung (28) dazu ausgelegt ist, die Folgebewegung-Information (30) mittels mindestens einer zwischen zumindest einem Teil (34, 66) der mindestens einen Detektionsmasse (18) und/oder der mindestens einen Teilmasse (60) und mindestens einer an der Halterung (12) angeordneten Gegenelektrode (28a) anliegenden Spannung oder Kapazität, mittels einer piezoelektrischen Auswertung
und/oder mittels einer piezoresistiven Auswertung zu ermitteln.

8. Sensorvorrichtung nach einem der vorhergehenden Ansprüche, wobei die mindestens eine Folgebewegung mindestens eine Bewegung der mindestens einen Detektionsmasse (18) und/oder der mindestens einen Teilmasse (60) in Bezug zu der Halterung (12) oder in Bezug zu der mindestens einen Antriebsmasse (10) ist.

9. Sensorvorrichtung nach einem der vorhergehenden Ansprüche, wobei die mindestens eine Detektionsmasse (18) derart über die zumindest eine Koppelstruktur (20) an die mindestens einen Antriebsmasse (10) gekoppelt ist, dass die mindestens eine Detektionsmasse (18) während der mindestens einen harmonischen Schwingbewegung der mindestens einen Antriebsmasse (10) in die mindestens eine Folgebewegung entlang der Antriebsrichtung (16) versetzbar ist.

10. Sensorvorrichtung nach einem der Ansprüche 1 bis 8, wobei die mindestens eine Detektionsmasse (18) derart über die zumindest eine Koppelstruktur (20) mit der je einen Teilmasse (60) an die mindestens einen Antriebsmasse (10) gekoppelt ist, dass die mindestens eine Teilmasse (60) während der mindestens einen harmonischen Schwingbewegung der mindestens einen Antriebsmasse (10) in die mindestens eine Folgebewegung entlang der Antriebsrichtung (16) versetzbar ist.

11. Sensorvorrichtung nach einem der vorhergehenden Ansprüche, wobei die Sensorvorrichtung ein Drehratensensor ist.

12. Verfahren zum Betreiben einer Sensorvorrichtung mit mindestens einer Antriebsmasse (10) und mindestens einer Detektionsmasse (18), welche über zumindest eine Koppelstruktur (20) an die mindestens einen Antriebsmasse (10) gekoppelt ist, mit den Schritten:
Versetzen der mindestens einer Antriebsmasse (10) in mindestens eine harmonische Schwingbewegung derart, dass die mindestens eine Detektionsmasse (18) während der mindestens einen harmonischen Schwingbewegung der mindestens einen Antriebsmasse (10) mittels einer Corioliskraft in mindestens eine Detektionsbewegung entlang einer vorgegebene Detektionsrichtung (24) in Bezug zu einer Halterung (12) der Sensorvorrichtung versetzbar wird (S1);
**gekennzeichnet durch** den Schritt:
Ermitteln einer Folgebewegung-Information (30) bezüglich mindestens einer mittels der mindestens einen harmonischen Schwingbewegung der mindestens einen Antriebsmasse (10) angeregten Folgebewegung der mindestens einen Detektionsmasse (18) und/oder mindestens einer Teilmasse (20) der Koppelstruktur (20) entlang einer von der Detektionsrichtung (24) abweichenden Antriebsrichtung (16) (S3).

13. Verfahren nach Anspruch 12, wobei die mindestens eine Antriebsmasse (10) in die mindestens eine harmonische Schwingbewegung entlang der Antriebsrichtung (16) in Bezug zu der Halterung (12) versetzt wird.

14. Verfahren zum Ermitteln einer physikalischen Größe bezüglich einer Rotation eines Körpers mit den Schritten:
Betreiben einer Sensorvorrichtung mit mindestens einer Antriebsmasse (10) und mindestens einer Detektionsmasse (18), welche über zumindest eine Koppelstruktur (20) an die mindestens einen Antriebsmasse (10) gekoppelt ist, gemäß Anspruch 12 oder 13; und
Festlegen der physikalischen Größe zumindest unter Berücksichtigung der ermittelten Folgebewegung-Information (30) (S4).

15. Verfahren nach Anspruch 14, wobei eine Detektionsbewegung-Information (26) bezüglich der mindestens einen ausgeführten oder unterdrückten Detektionsbewegung der mindestens einen Detektionsmasse (18) ermittelt wird (S2), und wobei beim Festlegen der physikalischen Größe die ermittelte Detektionsbewegung-Information (26) zusätzlich zu der ermittelten Folgebewegung-Information (30) berücksichtigt wird.

## Claims

1. Sensor device comprising
at least one drive mass (10); and
at least one detection mass (18), the at least one detection mass (18) being coupled to the at least one drive mass (10) via at least one coupling structure (20) in such a way that, during at least one harmonic oscillating movement of the at least one drive mass (10), the at least one detection mass (18) can be caused by means of a Coriolis force to make at least one detection movement along a predefined detection direction (24) relative to a mounting (12) of the sensor device;
**characterized by**
at least one consequential movement detection unit (28), by means of which an item of consequential movement information (30) with respect to at least one consequential movement, excited by means of the at least one harmonic oscillating movement of the at least one drive mass (10), of the at least one detection mass (18) and/or at least one partial mass (60) of the coupling structure (20) along a drive direction (16) deviating from the detection direction (24) can be determined.

2. Sensor device according to Claim 1, wherein the at least one drive mass (10) is attached to the mounting (12) in such a way that the at least one drive mass (10) can be caused to make the at least one harmonic oscillating movement along the drive direction (16) relative to the mounting (12) by means of at least one actuating unit (14) of the sensor device.

3. Sensor device according to Claim 2, wherein the sensor device comprises two drive masses (10) as the at least one drive mass (10), which, by means of the at least one actuating unit (14), can be caused to make two mutually anti-parallel harmonic oscillating movements along the drive direction (16) relative to the mounting (12).

4. Sensor device according to Claim 3, wherein the sensor device comprises two detection masses (18) as the at least one detection mass (18), which are each coupled to respectively one of the two drive masses (10) via a coupling structure (20) in such a way that, during the mutually anti-parallel harmonic oscillating movements of the two drive masses (10), the two detection masses (18) can be caused by means of the Coriolis force to make two mutually anti-parallel detection movements along the detection direction (24) relative to the mounting (12).

5. Sensor device according to one of the preceding claims, wherein the sensor device comprises at least one detection movement measuring unit, by means of which an item of detection movement information (26) with regard to the at least one executed or suppressed detection movement of the at least one detection mass (18) can be determined, and wherein the sensor device additionally comprises an evaluation unit (32), by means of which, at least whilst taking account of the item of detection movement information (26) provided and the item of consequential movement information (30) provided, at least one physical variable with regard to a rotation of the sensor device can be recorded and output.

6. Sensor device according to one of the preceding claims, wherein the at least one consequential movement detection unit (28) is designed to determine the item of consequential movement information (30) independently of the at least one harmonic oscillating movement of the at least one drive mass (10).

7. Sensor device according to one of the preceding claims, wherein the at least one consequential movement detection unit (28) is designed to determine the item of consequential movement information (30) by means of at least one voltage or capacitance between at least one part (34, 66) of the at least one detection mass (18) and/or the at least one partial mass (60) and at least one mating electrode (28a) arranged on the mounting (12), by means of a piezoelectric evaluation and/or by means of a piezoresistive evaluation.

8. Sensor device according to one of the preceding claims, wherein the at least one consequential movement is at least one movement of the at least one detection mass (18) and/or the at least one partial mass (60) relative to the mounting (12) or relative to the at least one drive mass (10).

9. Sensor device according to one of the preceding claims, wherein the at least one detection mass (18) is coupled to the at least one drive mass (10) via the at least one coupling structure (20) in such a way that, during the at least one harmonic oscillating movement of the at least one drive mass (10), the at least one detection mass (18) can be caused to make the at least one consequential movement along the drive direction (16).

10. Sensor device according to one of Claims 1 to 8, wherein the at least one detection mass (18) is coupled to the at least one drive mass (10) via the at least one coupling structure (20) having the respective one partial mass (60) in such a way that, during the at least one harmonic oscillating movement of the at least one drive mass (10), the at least one partial mass (60) can be caused to make the at least one consequential movement along the drive direction (16).

11. Sensor device according to one of the preceding claims, wherein the sensor device is a rate-of-rotation sensor.

12. Method for operating a sensor device comprising at least one drive mass (10) and at least one detection mass (18), which is coupled to the at least one drive mass (10) via at least one coupling structure (20), comprising the steps:
setting the at least one drive mass (10) into at least one harmonic oscillating movement in such a way that, during the at least one harmonic oscillating movement of the at least one drive mass (10), the at least one detection mass (18) can be caused by means of a Coriolis force to make at least one detection movement along a predefined detection direction (24) relative to a mounting (12) of the sensor device (S1);
**characterized by** the step:
determining an item of consequential movement information (30) with respect to at least one consequential movement, excited by means of the at least one harmonic oscillating movement of the at least one drive mass (10), of the at least one detection mass (18) and/or at least one partial mass (20) of the coupling structure (20) along a drive direction (16) deviating from the detection direction (24) (S3).

13. Method according to Claim 12, wherein the at least one drive mass (10) is caused to make the at least one harmonic oscillating movement along the drive direction (16) relative to the mounting (12).

14. Method for determining a physical variable with respect to a rotation of a body, comprising the steps:
operating a sensor device comprising at least one drive mass (10) and at least one detection mass (18), which is coupled to the at least one drive mass (10) via at least one coupling structure (20), according to Claim 12 or 13; and
recording the physical variable, at least whilst taking account of the item of consequential movement information (30) that is determined (S4).

15. Method according to Claim 14, wherein an item of detection movement information (26) with respect to the at least one executed or suppressed detection movement of the at least one detection mass (18) is determined (S2), and wherein, when recording the physical variable, the item of detection movement information (26) that is determined is taken into account in addition to the item of consequential movement information (13) that is determined.

## Revendications

1. Dispositif de détection comprenant
au moins une masse d'entraînement (10) ; et
au moins une masse de détection (18), l'au moins une masse de détection (18) étant couplée à l'au moins une masse d'entraînement (10) par le biais d'au moins une structure de couplage (20) de telle sorte que l'au moins une masse de détection (18), pendant au moins un mouvement d'oscillation harmonique de l'au moins une masse d'entraînement (10), peut être amenée dans au moins un mouvement de détection au moyen d'une force de Coriolis le long d'une direction de détection (24) prédéfinie par rapport à un support (12) du dispositif de détection ;
**caractérisé par**
au moins un appareil de détection de mouvement successif (28) au moyen duquel peut être déterminée une information de mouvement successif (30) concernant au moins un mouvement successif, stimulé au moyen de l'au moins un mouvement d'oscillation harmonique de l'au moins une masse d'entraînement (10), de l'au moins une masse de détection (18) et/ou d'au moins une masse partielle (60) de la structure de couplage (20) le long d'une direction d'entraînement (16) différente de la direction de détection (24).

2. Dispositif de détection selon la revendication 1, l'au moins une masse d'entraînement (10) étant attachée au support (12) de telle sorte que l'au moins une masse d'entraînement (10) peut être amenée dans l'au moins un mouvement d'oscillation harmonique par rapport au support (12) le long de la direction d'entraînement (16) au moyen d'un appareil d'actionnement (14) du dispositif de détection.

3. Dispositif de détection selon la revendication 2, le dispositif de détection comportant deux masses d'entraînement (10) en tant que l'au moins une masse d'entraînement (10), lesquelles peuvent être amenées au moyen de l'au moins un appareil d'actionnement (14) dans deux mouvements d'oscillation harmoniques antiparallèles l'un à l'autre le long de la direction d'entraînement (16) par rapport au support (12).

4. Dispositif de détection selon la revendication 3, le dispositif de détection comportant deux masses de détection (18) en tant que l'au moins une masse de détection (18), lesquelles sont couplées respectivement à l'une des deux masses d'entraînement (10) respectivement par le biais d'une structure de couplage (20) de telle sorte que les deux masses de détection (18), pendant les mouvements d'oscillation harmoniques antiparallèles l'un à l'autre des deux masses d'entraînement (10), peuvent être amenées dans deux mouvements de détection au moyen de la force de Coriolis le long de la direction de détection (24) par rapport au support (12).

5. Dispositif de détection selon l'une des revendications précédentes, le dispositif de détection comportant au moins un appareil de mesure de mouvement de détection au moyen duquel peut être déterminée une information de mouvement de détection (26) concernant l'au moins un mouvement de détection exécuté ou inhibé de l'au moins une masse de détection (18), et le dispositif de détection comportant en plus un appareil d'interprétation (32) au moyen duquel peut être définie et délivrée au moins une grandeur physique concernant une rotation du dispositif de détection, au moins en tenant compte de l'information de mouvement de détection (26) mise à disposition et de l'information de mouvement successif (30) mise à disposition.

6. Dispositif de détection selon l'une des revendications précédentes, l'au moins un appareil de détection de mouvement successif (28) étant conçu pour déterminer l'information de mouvement successif (30) indépendamment de l'au moins un mouvement d'oscillation harmonique de l'au moins une masse d'entraînement (10).

7. Dispositif de détection selon l'une des revendications précédentes, l'au moins un appareil de détection de mouvement successif (28) étant conçu pour déterminer l'information de mouvement successif (30) au moyen d'au moins une tension ou une capacité appliquée entre au moins une partie (34, 66) de l'au moins une masse de détection (18) et/ou de l'au moins une masse partielle (60) et au moins une contre-électrode (28a) disposée sur le support (12), au moyen d'une interprétation piézoélectrique et/ou au moyen d'une interprétation piézorésistive.

8. Dispositif de détection selon l'une des revendications précédentes, l'au moins un mouvement successif étant au moins un mouvement de l'au moins une masse de détection (18) et/ou de l'au moins une masse partielle (60) par rapport au support (12) ou par rapport à l'au moins une masse d'entraînement (10).

9. Dispositif de détection selon l'une des revendications précédentes, l'au moins une masse de détection (18) étant couplée à l'au moins une masse d'entraînement (10) par le biais de l'au moins une structure de couplage (20) de telle sorte que l'au moins une masse de détection (18), pendant l'au moins un mouvement d'oscillation harmonique de l'au moins une masse d'entraînement (10), peut être amenée dans l'au moins un mouvement successif le long de la direction d'entraînement (16).

10. Dispositif de détection selon l'une des revendications 1 à 8, l'au moins une masse de détection (18) étant couplée par le biais de l'au moins une structure de couplage (20) avec respectivement la masse partielle (60) à l'au moins une masse d'entraînement (10) de telle sorte que l'au moins une masse partielle (60), pendant l'au moins un mouvement d'oscillation harmonique de l'au moins une masse d'entraînement (10), peut être amenée dans l'au moins un mouvement successif le long de la direction d'entraînement (16).

11. Dispositif de détection selon l'une des revendications précédentes, le dispositif de détection étant un capteur de vitesse de rotation.

12. Procédé pour faire fonctionner un dispositif de détection comprenant au moins une masse d'entraînement (10) et au moins une masse de détection (18), laquelle est couplée à l'au moins une masse d'entraînement (10) par le biais d'au moins une structure de couplage (20), comprenant les étapes suivantes :
amenée de l'au moins une masse d'entraînement (10) dans au moins un mouvement d'oscillation harmonique de telle sorte que l'au moins une masse de détection (18), pendant l'au moins un mouvement d'oscillation harmonique de l'au moins une masse d'entraînement (10), peut être amenée dans au moins un mouvement de détection au moyen d'une force de Coriolis le long d'une direction de détection (24) prédéfinie par rapport à un support (12) du dispositif de détection (S1) ;
**caractérisé par** l'étape :
détermination d'une information de mouvement successif (30) concernant au moins un mouvement successif, stimulé au moyen de l'au moins un mouvement d'oscillation harmonique de l'au moins une masse d'entraînement (10), de l'au moins une masse de détection (18) et/ou d'au moins une masse partielle (20) de la structure de couplage (20) le long d'une direction d'entraînement (16) différente de la direction de détection (24) (S3).

13. Procédé selon la revendication 12, l'au moins une masse d'entraînement (10) étant amenée dans l'au moins un mouvement d'oscillation harmonique par rapport au support (12) le long de la direction d'entraînement (16).

14. Procédé de détermination d'une grandeur physique concernant une rotation d'un corps, comprenant les étapes suivantes :
exploitation d'un dispositif de détection comprenant au moins une masse d'entraînement (10) et au moins une masse de détection (18), laquelle est couplée à l'au moins une masse d'entraînement (10) par le biais d'au moins une structure de couplage (20), selon la revendication 12 ou 13 ; et
définition d'une grandeur physique au moins en tenant compte de l'information de mouvement successif (30) déterminée (S4).

15. Procédé selon la revendication 14, une information de mouvement de détection (26) concernant l'au moins un mouvement de détection exécuté ou inhibé de l'au moins une masse de détection (18) étant déterminée (S2) et l'information de mouvement de détection (26) déterminée étant prise en compte en plus de l'information de mouvement successif (30) déterminée lors de la définition de la grandeur physique.
